# EUROPÄISCHE PATENTSCHRIFT

(11) **EP 0 358 006 B1**
(45) Veröffentlichungstag und Bekanntmachung des Hinweises auf die Patenterteilung: **24.03.1993**
(21) Anmeldenummer: 89115108.6
(22) Anmeldetag: 16.08.1989
(51) Int. Cl.: B01D 53/00, B01D 5/00, C02F 9/00, C02F 1/24

(54) **Verfahren zur Reinigung von aus Trocknungsanlagen stammenden Abgas und Anlage zur Durchführung des Verfahrens**
Method and apparatus for purifying waste gases from dryers
Procédé et dispositif pour purifier des gaz d'échappement d'un sécheur

(30) Priorität: 26.08.1988 CH 3176/88
(43) Veröffentlichungstag der Anmeldung: 14.03.1990
(73) Patentinhaber: HYDROTECHNIK GMBH, A-5033 Salzburg (AT)
(72) Erfinder: Wieser-Linhart, Johannes, A-5020 Salzburg (AT)
(74) Vertreter: Blum, Rudolf Emil Ernst

(56) Entgegenhaltungen:
- DE-A- 2 361 526
- DE-A- 3 229 960
- DE-A- 3 712 209
- US-A- 4 042 011

## Beschreibung

Die vorliegende Erfindung betrifft ein Verfahren zur Reinigung von aus Trocknungsanlagen stammendem Abgas sowie eine Anlage zur Durchführung des Verfahrens.

Bei Trocknungsanlagen werden neben Staub und Wasserdampf abhängig vom jeweiligen Trockengut auch wasserdampfflüchtige, gasförmige, organische Substanzen mit dem entstehenden Abgas und auch abhängig vom getrockneten Gut Flugasche ausgetragen.

Beispielsweise werden bei der Trocknung von Holzspähnen in Spanplattenwerken üblicherweise direkt beheizte Trommeltrockner eingesetzt. In diesen wird die vorhandene Feuchtigkeit des Trockengutes von 30 - 120 % auf 2 - 5 % vermindert. Dieses Abgas enthält ausser Feststoffen und Wasserdampf ein komplexes Gemisch aus anorganischen und organischen, luftfremden Substanzen bzw. Stoffen.

Bemerkenswert ist nun, dass es sich bei den organischen Stoffen mindestens zum Teil um flüchtige, natürliche Holzbestandteile handelt, zum Teil aber auch um weitere Stoffe, die beim Abbau der Holzsubstanz in der Verarbeitung in den Spanplattenwerken gebildet werden. Mengenmässig sind hier am bedeutendsten die Terpene, die natürliche Bestandteile des Holzes sind. Weiter ist nachgewiesen, dass auch Carbonsäuren, Formaldehyd, Methanol, Phenol und Cresole im Abgas vorhanden sind.

Bis anhin wurde üblicherweise dieses Abgas in Zyklonen gereinigt, womit dem sogenannten Reingas durchschnittliche Staubwerte von 100 - 200 mg/Nm³ erzielt worden sind, wobei jedoch Spitzenwerte mit 1000 mg/Nm³ auftreten können. Dabei liegt die Abgastemperatur üblicherweise bei 110 - 130° C und der Wasserdampfgehalt bei 300 - 350 g/Nm³. Eine Abscheidung der oben genannten organischen, gasförmigen Bestandteile ist bis anhin kaum erfolgt. Damit enthielt das Abgas noch beträchtliche Anteile an Staub und an organischen, gasförmigen Substanzen, welche in der Fachwelt als blauer Rauch bezeichnet sind und auch einen beträchtlichen Wasserdampfgehalt, der als weisser Rauch bezeichnet wird.

Es ist ein Reinigungsgerät für Fisch- und Fleischräuchereien bekannt geworden (DE-A-37 12 209), bei dem die Abluft von Räucherkammern, die mit Schadstoffen und Wasserdampf belastet ist, über einen indirekten Kondensationskühler geführt und auf ca. 15 - 20° C gekühlt wird. Dabei werden alle bei dieser Temperatur kondensierenden Stoffe abgeschieden. Der Kondensationsstufe folgen dann weitere Reinigungsstufen, die unabhängig voneinander individuell arbeiten. Diese Reinigungsstufen sind nicht untereinander in Kreisläufen eines Flüssigkeitsstromes verbunden, so dass ein schlechter thermischer Wirkungsgrad und eine schlechte Ausnützung vorgereinigter Medien vorhanden sind, so dass das Reinigungsgerät unökonomisch arbeitet.

Hier will die Erfindung Abhilfe schaffen. Die Erfindung, wie sie in den Ansprüchen gekennzeichnet ist, löst die Aufgabe, ein Verfahren zum Reinigen von Abgas und eine Anlage zur Durchführung des Verfahrens zu zeigen, womit die umweltbelastenden Substanzen auf einen Kleinstwert reduziert werden können, wozu einerseits das Gas in verschiedenen Stufen mittels Flüssigkeit gereinigt wird und jeweils ein Teil der anfallenden Reinigungsflüssigkeit vorgereinigt und jeweils einer vorgehenden Stufe im Kreislauf zurückgeführt wird. Der jeweilige Hauptteil der Reinigungsflüssigkeit wird seinerseits in verschiedenen Stufen gereinigt, wobei ebenfalls jeweils ein Teil des aus einer Reinigungsstufe austretenden Flüssigkeitsstromes einer vorgehenden Reinigungsstufe im Kreislauf zurückgeführt wird, wobei auch anfallende Wärmemengen zum Betrieb einzelner Stufen ausgenützt werden.

Die durch die Erfindung erreichten Vorteile sind im wesentlichen darin zu sehen, dass ein ökonomisches Reinigungsverfahren mit einem hohen insgesamten Wirkungsgrad gezeigt ist. Wird das Verfahren beispielsweise zur Reinigung des bei Holztrocknungsanlagen anfallenden Abgasen angewendet, lassen sich vorteilhaft die den sogenannten blauen Rauch und auch den sogenannten weissen Rauch bewirkenden Substanzen aus dem Abgas abtrennen.

Im folgenden wird die Erfindung anhand von der Ausführungswege darstellenden Zeichnung näher erläutert.

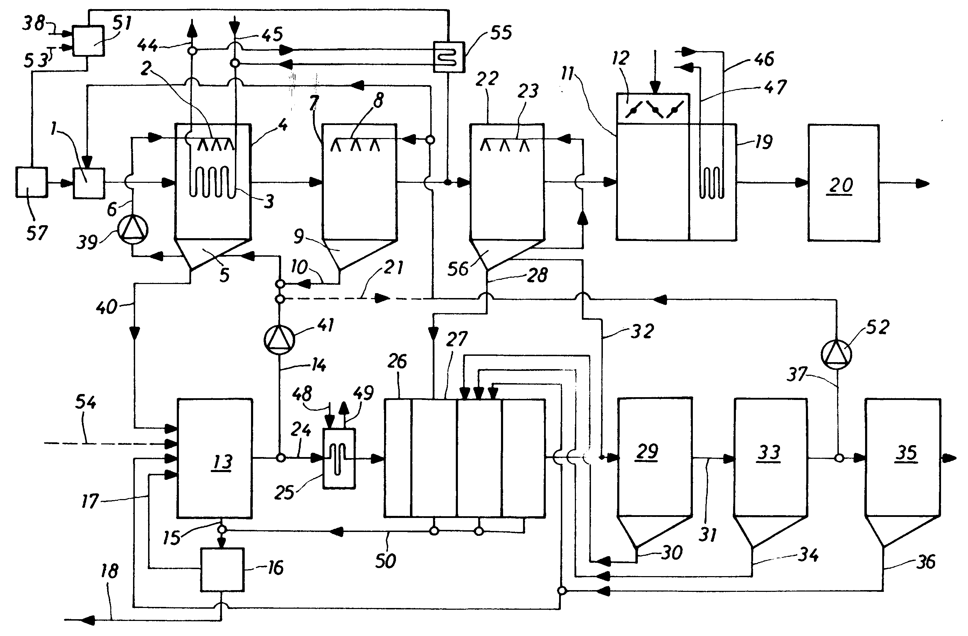

Die Figur zeigt schematisch eine Reinigungsanlage zur Durchführung eines Ausführungsbeispiels des erfindungsgemässen Verfahrens.

Das beispielsweise von einer Trocknungsanlage zugeführte Abgas oder einer Biomassefeuerung mit Flugasche belastete Abgas ist mit der Bezugsziffer 38 bezeichnet.

Im Falle von Spanplattenwerken hat das Abgas 38 einen Trommeltrockner 51 und einen Trockenabscheider 57 durchströmt, der mit der Austrittstemperatur des Trockners 51 arbeitet. Der Trockenabscheider 57 kann gemäss bekannten Ausführungen als Zyklon, als Gewebe- oder auch Elektrofilter ausgebildet sein. Bei gewissen Spanplattenwerken ist ein solcher Trockenabscheider in der Anlage des Werkes integriert, und bei solchen Anlagen, bei denen der Trockenabscheider nicht vorhanden ist, würde er der hier beschriebenen Anlage vorgeschaltet. Weiter, falls der Feststoffgehalt des aus dem Werk austretenden Abgases 38 bereits den erwünschten bzw. geforderten Gaswerten entspricht, wäre ein Trockenabscheider nicht notwendig.

Das im Trockenabscheider anfallende Erzeugnis kann einer weiteren Verwertungsstelle zugeführt oder gegebenenfalls zusammen mit abgeschiedener Flugasche entsorgt werden. Wesentlich ist, dass das zuströmende Abgas trocken ist.

Das zu behandelnde Abgas tritt vorerst in eine Befeuchtungsanlage 1 ein. In dieser Befeuchtungsanlage wird der Taupunkt des Abgases auf einen Wert von 60 - 85°C gebracht. Die dazu notwendige Flüssigkeit wird, wie es aus dem Schema ersichtlich ist, von einer späteren Behandlungsstufe her zugeführt, wobei die Einzelheiten dazu später noch beschrieben werden. Das Abgas strömt dann von der Befeuchtungsanlage 1 in eine Wasch- und Kondensationsvorrichtung 4. Diese Wasch- und Kondensationsvorrichtung 4 ist in Form eines Gas/Luftwärmetauschers und/oder Gas/Wasserwärmetauschers mit einer Sprühanlage 2 oder eines kühlturmförmigen Einspritzkühlers ausgebildet. Die Bezugsziffer 3 bezeichnet die zum Kondensieren dienende Kühlschlangeneinrichtung. In dieser Wasch- und Kondensationseinrichtung wird die Temperatur des Abgases zu einem Wert im Bereich von 20 - 40° abgesenkt. Der Taupunkt des Abgases beträgt jetzt ca. 60 - 85°C und dieser wird nun durch die Kühlung stark unterschritten, so dass der Wasserdampf und weitere in diesem Temperaturbereich kondensierenden Substanzen kondensieren.

Im Falle einer Holztrocknungsanlage befinden sich im Abgas z.B. Terpentene als organischer Hauptbestandteil, welche bei einem Temperaturbereich von 50 - 70°C kondensieren und folglich treten diese bei den Temperaturen unter 50°C als Aerosole und Flüssigkeitstropfen auf. Eine Vermischung derselben mit dem Wasserkondensat erfolgt nur insoweit, als die organischen Substanzen mit dem Kondensat mischbar bzw. darin löslich sind. Zu bemerken ist jedoch, dass in dieser Stufe Terpene, welche bekanntlich hydrophob sind, nur zum Teil, also nicht vollständig, abgeschieden werden, d.h. dass die Abscheidung der organischen flüssigen Tropfen in dieser Stufe, also der Wasch- und Kondensationsvorrichtung 4 erst zum Teil erfolgt.

Das in der Wasch- und Kondensationseinrichtung 4 abgeschiedene Kondensat wird in einem Sumpf 5 gesammelt, in welchem somit das anfallende Kondensat durch den nachfolgend beschriebenen Kreislauf aufbereitet wird.

Das aufbereitete Kondensat wird über eine Pumpe 39 und eine Kreislaufleitung 6 zur Sprühanlage 2 geführt. Folglich wird in ökonomischer Weise das aufbereitete Kondensat zum Waschen des einströmenden Abgases ausgenützt. Weiter wird das Kondensat vom Sumpf 5 über die Leitung 40 einer Flotationsvorrichtung 13 zugeführt. Von dieser Flotationsvorrichtung 13 wird ein Teilstrom der darin entstehenden Flüssigkeitsphase zur beschriebenen Aufbereitung über eine Abzweigleitung 14 mit Pumpe 41 zum Sumpf 5 der Wasch- und Kondensationsvorrichtung 4 zurückgeführt. Damit wird die Adsorption der Gas-Wasserphase in die Waschflüssigkeit begünstigt. Im Falle einer Biomassefeuerung wird entsprechend die Adsorption der Schwelgase in die Waschflüssigkeit begünstigt.

In der Flotationsvorrichtung 13 fällt offensichtlich eine schlammförmige Sedimentphase an. Diese wird über die Abführleitung 15 einer Entwässerungsvorrichtung 16 zugeführt. Die in der Entwässerungsvorrichtung 16 entstehende Flüssigkeitsphase wird über eine Rückführleitung 17 zur Flotationsvorrichtung 13 zurückgeführt. Der in der Entwässerungsvorrichtung 16 entstandene entwässerte Schlamm wird über die Leitung 18 einer Feuerungsanlage bzw. derjenigen Anlage wieder zurückgeführt, welche das Abgas 38 grundsätzlich erzeugt, so dass auch hier ein geschlossener Kreislauf vorhanden ist.

In der Wasch- und Kondensationsvorrichtung 4 wird offensichtlich Kondensationswärme frei, die zum ökonomischen Betrieb weiter ausgenützt wird. Das die angedeutete Kühlschlangeneinrichtung 3 durchströmende Kühlmedium, sei dies eine Flüssigkeit oder ein Gas, wird einerseits für Heizzwecke zur Aufwärmung von Wasser oder Luft als Fernwärme oder für Heizzwecke, bzw. Brauchwasser des Werkes selbst verwendet, in dem die Reinigungsanlage aufgestellt ist. Der entsprechende Vorlauf ist mit der Bezugsziffer 44 und der Rücklauf mit der Bezugsziffer 45 bezeichnet. Ersichtlich sind noch Abzweigungen, auf welche später noch eingegangen wird.

Zu bemerken ist, dass im Falle hochbelasteter, toxischer und organischer Abgasbelastung ein zusätzliches Adsorptionsmittel wie zum Beispiel Aktivkohle bzw. Braunkohlenkoks in die Wasch- und Kondensationsvorrichtung 4 eingeführt wird, welches zusätzliche Adsorptionsmittel ebenfalls bei der Flotation in der Flotationsvorrichtung 13 ausgeschieden wird. Das in der Wasch- und Kondensationseinrichtung 4 gekühlte Gas ist nun im wesentlichen mit feinen Wassertröpfchen nebelförmig belastet und auch mit organischen Aerosolen belastet, da, wie oben erwähnt, die Abscheidung der organischen flüssigen Tropfen in der Wasch- und Kondensationsvorrichtung 4 nicht vollständig erfolgt. Somit ist der Wasch- und Kondensationsvorrichtung 4 ein zusätzlicher Tropfenabscheider in Form eines Nass-Tiefbettfilters 7 nachgeschaltet, der weitgehend diese Flüssigkeitstropfen abscheidet. Dieser Nass-Tiefbettfilter 7 weist eine Sprühanlage 8 auf. Die Rückführleitung 10 auf ihrem Sumpf 9 verläuft zurück in den Sumpf 5 der Wasch- und Kondensationsvorrichtung 4, so dass die bereits angesprochene Adsorption hier noch weiter begünstigt wird. Die Versorgung der Sprühanlage 8 mit Flüssigkeit kann je nach örtlichen Verhältnissen unterschiedlich erfolgen. Vorauszuschicken ist, dass die obere Hälfte des Schemas die Reinigung der Gasphase und die untere Hälfte die Reinigung der Flüssigkeitsphase zeigt. Wenn die einzelnen Anlageteile (z.B. 27, 29, 33, 35) der Anlage zur Behandlung der Flüssigkeit räumlich vom Anlageteil, in dem das Gas behandelt wird, entfernt ist, wird die Sprühanlage 8 über die Leitung 14, Pumpe 41, und Leitung 21 vom Ausgang der Flotationsvorrichtung her versorgt. Dies trifft z.B. zu, wenn die Flüssigkeitsbehandlungsanlage aufgrund einer verhältnismässig kleinen Restbelastung durch die aus der Flotationsvorrichtung 13 ausströmende Flüssigkeit in einer kommunalen Kläranlage integriert ist. Ist die Flüssigkeitsbehandlungsanlage unmittelbar bei der Gasbehandlungsanlage, erfolgt die Beschickung der Sprühanlage 8 über die Abzweigleitung 37, auf die später im einzelnen eingegangen werden wird.

Vom Ausgang des Nass-Tiefbettfilters führt eine Abzweigleitung zu einem Wärmetauscher 55 und von diesem zum Trockner 51. Damit wird das Trocknen ökonomisch mit bereits gereinigtem Gas durchgeführt. Zum Erwärmen dieses Gases wird eine beim Kondensieren gewonnene Wärmemenge ausgenützt, wozu vom entsprechenden Vor- bzw. Rücklauf 45, 44 der Kühlschlangenvorrichtung eine Abzweigleitung abgezweigt ist.

Die Bezugsziffer 22 bezeichnet eine dem Nass-Tiefbettfilter 7 folgende Biowaschvorrichtung, welche eine Sprühanlage 23 enthält.

Diese Biowaschvorrichtung 22 ist eine alternative Ausführung, die nicht in jedem Fall notwendig und vorhanden ist. Sie ist dann vorhanden, wenn das Abgas einen relativ hohen Anteil von bei niedriger Temperatur in Gas gelöster Form verbleibenden Kohlenwasserstoff enthält. Die Biowaschvorrichtung 22 ist mit Füllkörpern irgendwelcher bekannter Ausführung ausgerüstet, so dass ein intensiver Kontakt zwischen dem aus der Sprühanlage 23 ausströmenden Waschwasser und dem hier weiter zu reinigenden Gas sichergestellt ist.

Vom Sumpf 56 dieser Biowaschvorrichtung 22 wird die Waschflüssigkeit im Kreislauf zur Sprühanlage 23 zurückgeführt. Weiter führt eine Austrittsleitung 28 zu einer biologischen Reinigungsanlage 27, auf die noch später eingegangen wird und zum die anfallenden Flüssigkeiten behandelnden Anlageteil gehört. Vom Austritt der Reinigungsanlage 27 führt eine Rückführleitung 32 zurück zum Sumpf 56 der Biowaschvorrichtung 22, so dass auch ein geschlossener Kreislauf vorhanden ist.

Nach der Biowaschvorrichtung 22 strömt das Gas durch eine Trockenkammer 11 und wird entweder im Anfahrbetrieb durch Trockenluft, die durch den Frischlufteinlass 12 eingebracht wird, oder ausschliesslich durch Temperaturerhöhung im Wärmetauscher 19 bei Normalbetrieb getrocknet wird. Der Trockenluftkammer 11 ist unmittelbar eine Heizvorrichtung 19 nachgeschaltet. Deren Vorlauf 46 bzw. Rücklauf 47 können beispielsweise mit dem Vorlauf 44 bzw. Rücklauf 45 der Wasch- und Kondensationseinrichtung 4 in Verbindung stehen. In der Trockenluftkammer 11 wird das Gas zusammen mit der Einwirkung der Heizvorrichtung 19 auf einen Feuchtigkeitsgrad gebracht, der für die nachfolgende Elektrofilteranlage 20 optimal ist. In dieser Elektrofilteranlage 20 erfolgt die letzte, feinste Reinigung des Gases, wonach es dann umweltfreunldich in die Umgebung abgegeben werden kann.

Es wird nun vor allem auf den unteren Teil der Zeichnung verwiesen, welche die Anlageteile zur Behandlung der anfallenden Flüssigkeit bzw. Flüssigkeiten zeigt.

In der Flotationsvorrichtung 13 wird die Flotierung insbesondere des Kondensat/Flüssigkeitsgemisches durchgeführt, welches durch die Leitung 40 vom grobabscheidenden Sumpf 5 der Wasch- und Kondensationseinrichtung 4 hergeleitet wird. Vorteilhaft wird in der Flotationsvorrichtung 13 noch ein Flockungsmittel dazugegeben.

Eine Teilmenge der aus der Flotationsvorrichtung 13 ausströmenden Flüssigkeitsphase wird, wie bereits erwähnt, über die Abzweigleitung 14 dem Sumpf 5 der Wasch-und Kondensationsvorrichtung 4 und auch alternativ über die weitere Abzweigleitung 21 der Befeuchtungsanlage 1 und der Sprühanlage 8 des Nass-Tiefbettfilters 7 zugeführt. Die Hauptmenge der aus der Flotationsvorrichtung 13 ausströmenden Flüssigkeit 24 durchströmt vorerst eine Kühlvorrichtung 25. Beispielsweise können der Zulauf 48 und der Rücklauf 49 der Kühlvorrichtung 25 in Verbindung mit dem Vorlauf 44 bzw. Rücklauf 45 von der Wasch- und Kondensationsvorrichtung 4 stehen. Der Zweck der Kühlvorrichtung 25 ist, die Temperatur der zugeführten Flüssigkeit auf einen Wert zu bringen, der für einen optimalen biologischen Abbau in der nachfolgenden biologischen Reinigungsanlage 27 notwendig ist, wobei in der biologischen Reinigungsanlage 27 die im Wasser gelösten, abbaubaren Substanzen abgebaut werden. Diese Reinigungsanlage 27 ist gemäss allgemein bekannten Ausführungen ausgebildet. Der biologischen Reinigungsanlage 27 ist ein Pufferbecken 26 vorgeschaltet. Damit werden schlagartige Änderungen der Eigenschaft, insbesondere der Toxizität der der biologischen Reinigungsanlage 26 zugeführten Flüssigkeit vermindert, so dass keine Störungen in der Reinigungsanlage 27 auftreten können. Der schlammseitige Auslass 50 in der Reinigungsanlage 27 ist der Abführleitung 15 aus der Flotationsvorrichtung 13 zugeführt, mit der der durch den Auslass 50 austretende Schlamm der Reinigungsanlage 27 der Entwässerungsvorrichtung 16 zurückgeführt und entsprechend den vorgängig beschriebenen Kreisläufen zu den entsprechenden Anlageteilen zurückgeführt wird.

Die aus der Reinigungsanlage 27 austretende Flüssigkeit ist einer Nachklärvorrichtung 29, z.B. einer Flotationsvorrichtung oder einem Absatzbecken zugeführt. Die hier entstehende Verunreinigungsphase strömt durch den Auslass 30 wieder zur biologischen Reinigungsanlage zurück.

Der aus der Nachklärvorrichtung 29 austretende Hauptstrom 31 strömt danach in eine Sandfiltervorrichtung 33. Der Auslass 34 der verunreinigten Phase der Sandfiltervorrichtung 33 wird ebenfalls der biologischen Reinigungsanlage 27 zurückgeführt. Nach der Sandfiltervorrichtung 33 ist wieder eine mit einer Pumpe 52 versehene Abzweigleitung 37 gezeichnet, welche einerseits zur Sprühanlage 8 des Nass-Tiefbettfilters 7 und andererseits zur Befeuchtungsanlage 1 zurückführt. Diese Abzweigleitung 37 kommt dann zum Einsatz, wenn der Anlageteil zur Behandlung der anfallenden Flüssigkeit beim Anlageteil zur Behandlung des Abgases angeordnet ist. Falls die Flüssigkeitsbehandlung bei einer kommunalen Kläranlage erfolgt, also vom Abgasbehandlungsteil räumlich entfernt ist, erfolgt die Beschickung, wie früher erwähnt, über die weitere Abzweigleitung 21 von der Flotationsvorrichtung 13 her.

Die letzte Stufe der Behandlung der Flüssigkeit ist eine Ultrafiltrationsvorrichtung 35. Das durch ihren Auslass 36 abströmende Konzentrat wird entweder der biologischen Reinigungsanlage 27 oder dann der Flotationsvorrichtung 13 zurückgeführt, abhängig davon, ob dieses sich flocken lässt. Von der Ultrafiltrationsvorrichtung 35 strömt dann endgültig gereinigte Flüssigkeit in das öffentliche Gewässer.

Bei der Befeuchtungsanlage 1 ist zusätzlich zur Leitung für das zugeführte Abgas 38 strichliniert eine weitere Zuströmleitung 53 eingezeichnet. Durch diese Zuströmleitung 53 können auch Abgase der Reinigungsanlage zugeführt werden, die von z.B. der Ölheizung und Warmwasseraufbereitung des Spanplattenwerkes und Bürogebäudes her stammen. Eine weitere strichliniert gezeichnete Leitung 54 erstreckt sich zur Flotationsvorrichtung 13. Durch diese Leitung 54 können industrielle Abwässer und solche des beispielsweisen Bürogebäudes zur Reinigung zugeführt werden. Das heisst, dass die erfindungsgemäss ausgebildete Anlage nicht nur auf ein industrielles Reinigen beschränkt ist; in dieser können auch sämtliche in einem Werk einschliesslich Bürogebäude entstehenden umweltbelastenden Abgase und Abwässer vollständig gereinigt werden.

## Patentansprüche

1. Verfahren zur Reinigung von Abgas, bei dem der Taupunkt des Abgases auf einen Wert von 60 - 85° C gebracht und das Abgas durch Wärmetausch auf einen Wert von 20 - 60° C gekühlt wird, um ein Kondensieren des im Abgas enthaltenen Wasserdampfes und weiterer kondensierbarer Stoffe zu bewirken, und das sich abkühlende Gas gleichzeitig gewaschen wird, indem die beim Waschen anfallende Flüssigkeit dem beim Kondensieren anfallenden Kondensat zugemischt und das Kondensat / Flüssigkeitsgemisch mittels einer Flotation gereinigt und dieses Gemisch zum Waschen des Gases kreislaufgeführt wird, danach das Gas nassgefiltert und gleichzeitig durch eine Teilmenge des mittels der Flotation gereinigten Kondensat/Flüssigkeitsgemisch nochmals gewaschen wird, wobei die beim Waschen anfallende Flüssigkeit dem mittels der Flotation gereinigten Kondensat-Flüssigkeitsgemisch rückgeführt wird und das Gas schliesslich durch Wiedererwärmung auf 40 - 60°C getrocknet wird, und die bei der Flotation insgesamt anfallende Sedimentphase entwässert und verbrannt wird, wobei das bei der Verbrennung entstehende Gas dem zu reinigenden Abgas zugegeben wird.

2. Verfahren nach Anspruch 1, dadurch gekennzeichnet, dass das erwärmte getrocknete Gas danach elektrogefiltert und schliesslich in die Umgebung abgegeben wird, wobei die Wiedererwärmung durch einen Teil der beim Kondensieren entstehenden Wärmemenge erfolgt.

3. Verfahren nach Anspruch 1, dadurch gekennzeichnet, dass die nach der Entwässerung entstehende Flüssigkeit im Kreislauf der Flotation zurückgeführt und eine Teilmenge der bei der Flotation entstehenden Flüssigkeitsphase dem beim Kondensieren anfallenden Kondensat zugeführt wird.

4. Verfahren nach Anspruch 1, dadurch gekennzeichnet, dass eine weitere Teilmenge der bei der Flotation entstehenden Flüssigkeitsphase zur Steuerung des Taupunktes und zum genannten nochmaligen Waschen des der Nassfilterung unterworfenen Abgases rückgeführt wird.

5. Verfahren nach Anspruch 1, wobei das Abgas bei einer Temperatur niedriger als 40° C in gasgelöster Form verbleibende Kohlenwasserstoffe aufweist, dadurch gekennzeichnet, dass das Abgas nach der Nassfilterung und vor dem Trocknen einer Biowäsche unterworfen wird, wozu die Waschflüssigkeit einerseits kreislaufgeführt und andererseits biologisch gereinigt wird, wobei die biologisch gereinigte Waschflüssigkeitsmenge der kreislaufgeführten Waschflüssigkeitsmenge zugemischt und wieder zurückgeführt wird.

6. Verfahren nach Anspruch 1, dadurch gekennzeichnet, dass eine Hauptmenge der bei der Flotation entstandenen Flüssigkeitsphase einem Wärmetauscher und nach Ablauf einer Verweilzeit zur Dämpfung sprunghafter Änderungen ihrer Zusammensetzung einer biologischen Reinigung unterworfen wird, wobei der anfallende Schlamm gemeinsam mit der bei der Flotation entstandenen Sedimentphase entwässert wird.

7. Verfahren nach Anspruch 6, dadurch gekennzeichnet, dass die belastete Waschflüssigkeit der Biowäsche zusammen mit der bei der Flotation anfallenden Flüssigkeitsphase einer biologischen Reinigung unterworfen wird.

8. Verfahren nach Anspruch 6, dadurch gekennzeichnet, dass die biologisch gereinigte Flüssigkeit nachgeklärt und die dabei ausgeschiedene Verunreinigungsphase zur sich in der biologischen Reinigung befindlichen, bei der Flotation entstandenen Flüssigkeitsphase zurückgeführt wird.

9. Verfahren nach Anspruch 5 und 8, dadurch gekennzeichnet, dass eine Teilmenge der sich in der biologischen Reinigung befindlichen Flüssigkeit zur Biowäsche des Abgases im Kreislauf geführt wird.

10. Verfahren nach Anspruch 8, dadurch gekennzeichnet, dass die Hauptmenge der nachgeklärten Flüssigkeit sandgefiltert und die ausgefilterte Verunreinigungsphase ebenfalls zur sich in der biologischen Reinigung befindlichen bei der Flotation entstandenen Flüssigkeitsphase zurückgeführt wird.

11. Verfahren nach Anspruch 10, dadurch gekennzeichnet, dass die sandgefilterte Flüssigkeit einer Ultrafiltration unterworfen und deren ausgeschiedene Verunreinigungsphase ebenfalls zur sich in der biologischen Reinigung befindlichen bei der Flotation entstandenen Flüssigkeitsphase und/oder dem Kondensat/Flüssigkeitsgemisch rückgeführt wird, das der Flotation unterworfen ist.

12. Verfahren nach Anspruch 11, dadurch gekennzeichnet, dass eine Teilmenge der sandgefilterten Flüssigkeit zur Steuerung des Taupunktes des Abgases und/oder zum Waschen des Gases beim Nassfiltern rückgeführt wird.

13. Verfahren nach Anspruch 1, dadurch gekennzeichnet, dass vor dem Kühlen des Abgases dasselbe getrocknet und entstaubt wird, indem einer Teilmenge des nassgefilterten Gases eine bei der Kondensation gewonnene Wärmemenge zugeführt wird, welche Teilmenge des nassgefilterten Gases dem zu trocknenden Abgas zugemischt wird.

14. Anlage zur Durchführung des Verfahrens nach Anspruch 1, gekennzeichnet durch eine Befeuchtungsanlage (1), welcher eine eine Sprühanlage (2) und eine Kühlschlangeneinrichtung (3) aufweisende Wasch- und Kondensationsvorrichtung (4) zum Waschen und Kühlen des Abgases nachgeschaltet ist und die einen als Grobabscheider ausgebildeten Sumpf (5) aufweist, von welchem eine Kreislaufleitung (6) für Kondensat zur Sprühanlage (2) zurück verläuft, welcher Wasch- und Kondensationsvorrichtung (4) ein Nass-Tiefbettfilter (7) mit einer weiteren Sprühanlage (8) nachgeschaltet ist, welcher Nass-Tiefbettfilter (7) einen Sumpf (9) für die versprühte Waschflüssigkeit aufweist, der über eine Rückführleitung (10) mit dem Sumpf (5) der Wasch- und Kondensationsvorrichtung (4) in Verbindung steht, welchem Nass-Tiefbettfilter (7) eine Trockenkammer (11) mit einem regelbaren Trockenlufteinlass (12) nachgeschaltet ist, und durch eine Flotationsvorrichtung (13), die einlaufseitig mit dem Sumpf (5) der Wasch- und Kondensationsvorrichtung (4) in Verbindung steht und von deren Austritt für die Flüssigphase eine zum Sumpf (5) der Wasch- und Kondensationsvorrichtung (4) rückgeführte Abzweigleitung (14) verläuft, und die über eine Abführleitung (15) für die Sedimentphase mit einer Entwässerungsvorrichtung (16) in Verbindung steht, die flüssigkeitsseitig über eine Rückführleitung (17) mit der Flotationsvorrichtung (13) in Verbindung steht und einen schlammseitigen Auslass (18) aufweist, der zur Verbindung mit der das Abgas erzeugenden Vorrichtung bestimmt ist, und dass vom Austritt für die Flüssigphase der Flotationsvorrichtung eine weitere Abzweigleitung (21) zur Befeuchtungsanlage und Sprühanlage des Nass-Tiefbettfilters (7) verläuft.

15. Anlage nach Anspruch 14, dadurch gekennzeichnet, dass der Trockenkammer (11) eine Heizvorrichtung (19) zugeordnet und deren Austritt mit einer Elektrofilteranlage (20) verbunden ist.

16. Anlage nach Anspruch 14, dadurch gekennzeichnet, dass zwischen dem Nass-Tiefbettfilter (7) und der Trockenkammer (11) eine mit Füllkörpern versehene Biowaschvorrichtung (22) mit einer Sprühanlage (23) angeordnet ist.

17. Anlage nach Anspruch 15, dadurch gekennzeichnet, dass die Heizvorrichtung (19) heizmittelseitig mit der Kühlschlangeneinrichtung (3) der Wasch- und Kondensationsvorrichtung (4) in Verbindung steht.

18. Anlage nach Anspruch 14, dadurch gekennzeichnet, dass die Austrittsleitung (24) für die Flüssigphase der Flotationsvorrichtung (13) durch eine Heizvorrichtung (25) und danach zu einem Pufferbecken (26) einer biologischen Reinigungsanlage (27) verläuft, welche Reinigungsanlage (27) schlammseitig mit der Entwässerungsvorrichtung (16) in Verbindung steht.

19. Anlage nach Anspruch 16 und 18, dadurch gekennzeichnet, dass die Biowaschvorrichtung (22) einen Sumpf (56) aufweist, von welchem die Waschflüssigkeit im Kreislauf zur Sprühanlage (23) der Biowaschvorrichtung (22) rückgeführt ist, welcher Sumpf (56) über eine Auslassleitung (28) mit der biologischen Reinigungsanlage (27) verbunden ist, und dass beim Austritt der biologischen Reinigungsanlage (27) eine Abzweigleitung (32) angeordnet ist, die kreislaufförmig zum Sumpf (56) der Biowaschvorrichtung (22) zurück verläuft.

20. Anlage nach Anspruch 18, dadurch gekennzeichnet, dass der biologischen Reinigungsanlage (27) eine Nachklärvorrichtung (29) nachgeschaltet ist, deren Auslass (30) für die Verunreinigungsphase mit der biologischen Reinigungsanlage (27) in Verbindung steht.

21. Anlage nach Anspruch 19, dadurch gekennzeichnet dass dem Nachklärbecken (29) eine Sandfiltervorrichtung (33) nachgeschaltet ist, deren Auslass (34) für die Verunreinigungsphase mit der biologischen Reinigungsanlage (27) in Verbindung steht.

22. Anlage nach Anspruch 21, dadurch gekennzeichnet dass der Sandfiltervorrichtung (33) eine Ultrafiltrationsvorrichtung (35) nachgeschaltet ist, deren Auslass (36) für die Verunreinigungsphase mit der biologischen Reinigungsanlage (27) und/oder der Flotationsvorrichtung (13) in Verbindung steht.

23. Anlage nach Anspruch 22, dadurch gekennzeichnet, dass zwischen der Sandfiltervorrichtung (33) und der Ultrafiltrationsvorrichtung (35) eine Abzweigleitung (37) zum Nass-Tiefbettfilter (7) und/oder der Befeuchtungsanlage (1) verläuft.

24. Anlage nach Anspruch 14,dadurch gekennzeichnet, dass der Wasch- und Kondensationseinrichtung (4) ein Trockner (51) vorgeschaltet ist, dass vom Austritt des Nass-Tiefbettfilters eine Abzweigleitung mit einem Wärmetauscher (55) zum Trockner (51) verläuft, und dass der Wärmetauscher (55) wärmezufuhrseitig mit der Zuführ-(45) bzw. Abführleitung (44) des Kühlmediums der Kühlschlangeneinrichtung (3) der Wasch- und Kondensationsvorrichtung (4) verbunden ist.

## Claims

1. Method for purifying exhaust gas, in which the dew point of the exhaust gas is brought to a value of 60 - 85°C and the exhaust gas is cooled by a heat exchanging to a value of 20 - 60°C in order to cause a condensing of the water vapor contained in the exhaust gas and of further condensable materials, and the gas cooling down is washed at the same time in that the liquid collecting during the washing is admixed to the condensate collecting during the condensation and the condensate/liquid mixture is purified by means of a flotation and this mixture is caused to recirculate for the washing of the gas, thereafter the gas is wet-filtered and simultaneously washed again by a portion of the amount of the condensate/liquid mixture purified by the flotation, whereby the liquid collected at the washing is recirculated to the condensate/liquid mixture purified by the flotation, and the gas is finally dried by a reheating to 40 - 60°C, and the total sediment phase collected at the flotation is dewatered and burnt, whereby the gas produced during the burning is added to the gas to be purified.

2. Method according to claim 1, characterized in that the heated dried gas is thereafter electrofiltered and finally exhausted into the atmosphere, whereby the reheating is done by a portion of the amount of heat produced during the condensing.

3. Method according to claim 1, characterized in that the liquid obtained after the dewatering is recirculated back to the flotation and a part of the amount of the liquid phase produced by the flotation is fed to the condensate obtained at the condensing.

4. Method according to claim 1, characterized in that a further part of the quantity of the liquid phase obtained at the flotation is recirculated for said washing again of the exhaust gas subjected to the wet-filtering.

5. Method according to claim 1, whereby the exhaust gas includes at a temperature below 40°C hydrocarbons remaining in a gas-dissolved state, characterized in that the exhaust gas is subjected to a biological washing after the wet-filtering and prior to the drying, for which the washing liquid is on the one hand recirculated and on the other hand purified biologically, whereby the biologically purified amount of washing liquid is admixed to the recirculated amount of washing liquid and is again recirculated.

6. Method according to claim 1, characterized in that a main quantity of the liquid phase obtained by the flotation is led to a heat exchanger and after expiration of a dwelling time for an attenuation of sudden changes of its composition is subjected to a biological purifying, whereby the sludge obtained is dewatered together with the sediment phase obtained at the flotation.

7. Method according to claim 6, characterized in that the loaded washing liquid of the biological washing is subjected to a biological purifying together with the liquid phase obtained at the flotation.

8. Method according to claim 6, characterized in that the biologically purified liquid is repurified and the contaminant phase separated thereby is recirculated to the liquid phase obtained at the flotation and present in the biological purification.

9. Method according to claim 5 and 8, characterized in that a part of the liquid present in the biological purification is recirculated for the biological washing of the exhaust gas.

10. Method according to claim 8, characterized in that the main quantity of the repurified liquid is sand-filtered and the contaminant phase which is filtered out is also recirculated to the liquid phase obtained at the flotation and present in the biological purification.

11. Method according to claim 10, characterized in that the sand-filtered liquid is subjected to an ultrafiltration and the contaminant phase which has been filtered out is also recirculated to the liquid phase obtained at the flotation and/or to the condensate/liquid mixture which is subjected to the flotation.

12. Method according to claim 11, characterized in that a part of the sand-filtered liquid is recirculated for the controlling of the dew point of the exhaust gas and/or for the washing of the gas during the wet-filtering.

13. Method according to claim 1, characterized in that prior to the cooling of the waste gas it is dried and dust is removed therefrom in that an amount of heat obtained at the condensating is recirculated to a part of the amount of the wet-filtered gas, which partial amount of the wet-filtered gas is admixed to the exhaust gas to be dried.

14. Apparatus for practising the method of claim 1, characterized by a moistening plant (1) followed downstream by a washing and condensing apparatus (4) for a washing and cooling of the exhaust gas having a sprinkler plant (2) and a cooling coil system (3) and a sump (5) designed as coarse precipitator, from which a circulation loop circuit (6) for condensate runs back to the sprinkler plant (2), which washing and condensing apparatus (4) is followed by a wet-deep bed filter (7) having a further sprinkler plant (8), which wet-deep bed filter (7) includes a sump (9) for the sprinkled liquid which is connected via a recirculation conduit (10) to the sump (5) of the washing and condensing apparatus (4), which wet-deep bed filter (7) is followed by a drying chamber (11) with a controllable drying air inlet (12), and by a flotation plant (13) communicating at the inlet side with the sump (5) of the washing and condensing apparatus (4) and having an outlet for the liquid phase from which a branch conduit (14) extends back to the sump (5) of the washing and condensing apparatus (4), and which communicates via a discharge conduit (15) for the sediment phase with a dewatering device (16) which at the liquid side communicates via a return conduit (17) with the flotation plant (13) and includes a sludge outlet (18) intended for a connection to the device generating the exhaust gas, and in that a further branch conduit (21) extends from the outlet for the liquid phase of the flotation plant to the moistening plant and the sprinkler plant of the wet-deep bed filter (7).

15. Apparatus according to claim 14, characterized in that a heating apparatus (19) is allocated to the drying chamber (11) of which the outlet is connected to an electrofilter plant (20).

16. Apparatus according to claim 14, characterized in that a bio-washing plant (22) having filter bodies and having a sprinkler apparatus (23) is located between the wet-deep bed filter (7) and the drying chamber (11).

17. Apparatus according to claim 15, characterized in that the heating apparatus (19) communicates regarding the heating medium with the cooling coil system (3) of the washing and condensing apparatus (4).

18. Apparatus according to claim 14, characterized in that the outflow conduit (24) for the liquid phase of the flotation plant (13) extends through a heating apparatus (25) and thereafter to a surge basin (26) of a biological treatment plant (27), which treatment plant (27) communicates at its sludge outlet with the dewatering device (16).

19. Apparatus according to claim 16 and 18, characterized in that the biowashing plant (22) comprises a sump (56) from which the washing liquid is recirculated to the sprinkler apparatus (23) of the biowashing plant (22), which sump (56) is connected with the biological treatment plant (27) via an outlet conduit (28), and in that at the outlet of the biological treatment plant (27) a branch conduit (32) is located which extends back in form of a return circuit to the sump (56) of the biowashing plant (22).

20. Apparatus according to claim 18, characterized in that the biological treatment plant (27) is followed by a repurification apparatus (29) of which the outlet (30) for the contaminant phase communicates with the biological treatment plant (27).

21. Apparatus according to claim 19, characterized in that the repurification apparatus (29) is followed by a sand filter apparatus (33) of which the outlet (34) for the contaminant phase communicates with the biological treatment plant (27).

22. Apparatus according to claim 21, characterized in that the sand filter apparatus (33) is followed by an ultrafiltration apparatus (35) of which the outlet (36) for the contaminant phase communicates with the biological treatment plant (27) and/or the flotation plant (13).

23. Apparatus according to claim 22, characterized in that a branch conduit (37) between the sand filter apparatus (33) and the ultrafiltration apparatus (35) extends to the wet-deep bed filter (7) and/or the moistening plant (1).

24. Apparatus according to claim 14, characterized in that a drying apparatus (51) is located upstream of the washing and condensing apparatus (4), that a branch conduit with a heat exchanger (55) extends from the outlet of the wet-deep bed filter to the drying apparatus (51), and that the heat exchanger (55) communicates at its heat supply side with the feeding (45) and discharge conduit (44) of the cooling medium of the cooling coil system (3) of the washing and condensing apparatus (4).

## Revendications

1. Procédé d' épuration de gaz d'échappement, dans lequel le point de condensation du gaz d'échappement est amené a une valeur comprise entre 60 à 85° C et le gaz d'échappement refroidi par échange thermique à une température comprise entre 20 et 60° C, afin de provoquer la condensation de la vapeur d'eau et des autres substances condensables contenues dans le gaz d'échappement, le gaz qui se refroidit étant en même temps lavé, dans lequel le liquide obtenu par le lavage est mélangé au condensat résultant de la condensation, et le mélange condensat/liquide est épuré par flottation et mis en circulation pour lavage du gaz, après quoi le gaz passe par un filtre humide et, en même temps, est encore lavé par une quantité partielle du mélange de condensat/liquide épuré par la flottation, le liquide produit lors de ce second lavage étant renvoyé au mélange condensat/liquide précédemment épuré par la flottation, le gaz étant finalement séché par réchauffement à une température comprise entre 40 et 60° C, toute la phase résultant de la flottation est déshydratée et brûlée, le gaz produit par la combustion étant ajouté au gaz d'échappement à épurer.

2. Procédé suivant la revendication 1, caractérisé en ce que le gaz réchauffé et séché passe ensuite par un électrofiltre et est finalement rejeté dans l'environnement, le réchauffement étant produit par une partie de la quantité de chaleur produite lors de la condensation.

3. Procédé suivant la revendication 1, caractérisé en ce que le liquide produit par la dessiccation est renvoyé dans le circuit de la flottation et qu'une quantité partielle de la phase liquide produite par la flottation est renvoyé au condensat résultant de la condensation.

4. Procédé suivant la revendication 1, caractérisé en ce qu'une autre quantité partielle de la phase liquide produite par la flottation est renvoyé pour la commande du point de condensation et encore pour le lavage ci-dessus mentionné du gaz d'échappement soumis à la filtration humide.

5. Procédé suivant la revendication 1, le gaz d'échappement présentant des hydrocarbures résiduels sous forme dissouts dans le gaz à une température inférieure à 40°C, caractérisé en ce qu'après la filtration humide et avant le séchage, le gaz d'échappement est soumis à un lavage biologique, le liquide de lavage étant, à cet effet, mis en circulation, d'une part, et biologiquement épuré, d'autre part, la quantité de liquide de lavage biologiquement épuré étant mélangée et encore renvoyée à la quantité de liquide de lavage mis en circulation.

6. Procédé suivant la revendication 1, caractérisé en ce qu'une quantité principale de la phase liquide produite par la flottation est soumise à un échangeur thermique, et, après un temps de séjour pour atténuer des modifications brusques de sa composition, à une épuration biologique, la boue résultante étant, avec la phase sédiment résultant de la flottation, desséchée.

7. Procédé suivant la revendication 6, caractérisé en ce que le liquide de lavage pollué issu du lavage biologique et la phase liquide produite par la flottation sont soumis ensemble à une épuration biologique.

8. Procédé suivant la revendication 6, caractérisé en ce que le liquide biologiquement épuré est redécanté et que la phase polluée séparée est renvoyée à la phase liquide résultant de la flottation, se trouvant en épuration biologique.

9. Procédé suivant les revendications 5 et 8, caractérisé en ce qu'une quantité partielle du liquide se trouvant en épuration biologique est mis en circulation pour le lavage biologique du gaz d'échappement.

10. Procédé suivant la revendication 8, caractérisé en ce que la quantité principale du liquide redécanté passe par un filtre à sable et en ce que la phase de pollution séparée par filtration est également renvoyée à la phase liquide produite par la flottation se trouvant en épuration biologique.

11. Procédé suivant la revendication 10, caractérisé en ce que le liquide passé par le filtre à sable est soumis à une ultrafiltration et en ce que sa phase de pollution séparée est elle aussi renvoyée à la phase liquide produite par la flottation se trouvant en épuration biologique et/ou au mélange condensat/liquide qui est soumis à la flottation.

12. Procédé suivant la revendication 11, caractérisé en ce qu'une quantité partielle du liquide passé par le filtre de sable est renvoyée pour la commande du point de condensation du gaz d'échappement et/ou pour le lavage du gaz lors de la filtration humide.

13. Procédé suivant la revendication 1, caractérisé en ce que, le refroidissement du gaz d'échappement, celuici est séché et dépoussiéré en apportant une quantité de chaleur obtenue lors de la condensation à une quantité partielle du gaz passé par le filtre humide qui est ensuite mélangée au gaz d'échappement à sécher.

14. Installation pour mettre en oeuvre le procédé suivant la revendication 1, caractérisé par un dispositif d'humidification (1), en aval duquel est disposé un appareil de lavage et de condensation (4) pour le lavage et le refroidissement du gaz d'échappement, qui présente un dispositif de vaporisation (2) et un dispositif à serpentins de condensation (4), et une cuve (5) prévue sous la forme d'un séparateur grossier, d'ou un conduit de circuit (6) pour le condensat retourne au dispositif de vaporisation (2), en aval du dispositif de lavage et de condensation (4) étant disposés un filtre humide à lit profond (7) avec un autre dispositif de vaporisation (8), le filtre humide à lit profond (7) comportant une cuve (9) pour le liquide de lavage vaporisé, qui est reliée, par un conduit de retour (10) à la cuve (5) du dispositif de lavage et de condensation (4), en aval du filtre humide à lit profond (7) étant disposée une chambre de séchage (11) avec une admission d'air chaud réglable (12), et par un dispositif de flottation (13) relié, par son entrée, à la cuve (5) du dispositif de lavage et de condensation (4), et dont la sortie de phase liquide conduit à un conduit de dérivation (14) qui retourne à la cuve (5) du dispositif de lavage et de condensation (4) et qui est relié, par un conduit d'évacuation (15) de la phase sédiment, à un dispositif de dessiccation (16) qui est relié, pour le liquide, par un conduit de retour (17), au dispositif de flottation (13), et présente une sortie 18, pour la boue, destinée au raccordement au dispositif produisant le gaz d'échappement, et en ce qu'un autre conduit de dérivation (21) va de la sortie de la phase liquide du dispositif de flottation au dispositifs d'humidification et de vaporisation du filtre humide à lit profond (7).

15. Installation suivant la revendication 14, caractérisée en ce qu'à la chambre de séchage (11), est associé un dispositif de chauffage (19), dont la sortie est reliée à une installation d'électrofiltration (20).

16. Installation suivant la revendication 14, caractérisée en ce qu'entre le filtre humide à lit profond (7) et la chambre de séchage (11), est disposé un dispositif de lavage biologique (22) pourvu de corps de remplissage avec un dispositif de vaporisation (23).

17. Installation suivant la revendication 15, caractérisée en ce que le dispositif de chauffage (19) est relié, pour le combustible, au dispositif à serpentins de condensation (3) du dispositif de lavage et de condensation (4).

18. Installation suivant la revendication 14, caractérisée en ce que le conduit d'évacuation (24) de la phase liquide du dispositif de flottation (13) passe à travers un dispositif de chauffage (25) pour arriver ensuite à un bassin tampon (26) d'une installation d'épuration biologique (27) qui est reliée, pour la boue, au dispositif de dessiccation (16).

19. Installation suivant les revendications 16 et 18, caractérisée en ce que le dispositif de lavage biologique (22) comporte une cuve (56), d'où le liquide de lavage est renvoyé en circuit au dispositif de vaporisation (23) du dispositif de lavage biologique (22), dont la cuve (56) est reliée, par un conduit de sortie (28), à l'installation d'épuration biologique (27), et en ce que, dans la sortie de l'installation d'épuration biologique (27), est disposé un conduit de dérivation (32) qui retourne en circuit à la cuve (56) du dispositif de lavage biologique (22).

20. Installation suivant la revendication 18, caractérisée en ce qu'en aval de l'installation d'épuration biologique (27) se trouve un dispositif de redécantation (29) dont la sortie (30) de phase polluée est reliée à l'installation d'épuration biologique (27).

21. Installation suivant la revendication 19, caractérisée en ce qu'en aval du bassin de redécantation (29) est disposé un filtre à sable (33) dont la sortie (34) de phase polluée est reliee a l'installation d'épuration biologique (27).

22. Installation suivant la revendication 21, caractérisée en ce qu'en aval du filtre à sable (33) se trouve un dispositif d'ultrafiltration (35) dont la sortie (36) de phase polluée est reliée à l'installation d'épuration biologique (27) et/ou au dispositif de flottation (13).

23. Installation suivant la revendication 22, caractérisée en ce qu'entre le filtre à sable (33) et le dispositif d'ultrafiltration (35) , un conduit de dérivation (37) mène au filtre humide à lit profond (7) et/ou au dispositif d'humidification (1).

24. Installation suivant la revendication 14, caractérisée en ce qu'en amont du dispositif de lavage et de condensation (4) est disposé un séchoir (51), en ce qu'un conduit de dérivation avec un échangeur thermique (55) mène de la sortie du filtre humide à lit profond au séchoir (51) et en ce que l'échangeur thermique (55) est relié, pour l'entrée de chaleur, aux conduits d'entrée (45) et de sortie (44) du milieu refroidissant du dispositif à serpentins de condensation (3) du dispositif de lavage et de condensation (4).
